# FASCICULE DE BREVET EUROPEEN

(11) **EP 3 429 977 B1**
(45) Date de publication et mention de la délivrance du brevet: **04.03.2020**
(21) Numéro de dépôt: 17714855.8
(22) Date de dépôt: 13.03.2017
(51) Int. Cl.: C04B 28/14, B01J 20/32

(54) **PLAQUE DE PLATRE, PROCEDE POUR SA FABRICATION ET SON UTILISATION**
GIPSPLATTE, VERFAHREN ZUR IHRER HERSTELLUNG UND VERWENDUNG
PLASTERBOARD, METHOD FOR MANUFACTURING IT AND USE THEREOF

(30) Priorité: 14.03.2016 FR 1652120
(43) Date de publication de la demande: 23.01.2019
(73) Titulaire: Saint-Gobain Placo, 92150 Suresnes (FR)
(72) Inventeur: DION, Yann, 93190 Livry Gargan (FR); CHUDA, Katarzyna, 92600 Asnieres Sur Seine (FR); DEMATHIEU-ROELTGEN, Caroline, 77100 Meaux (FR); CHENAL, Marion, 93100 Montreuil (FR)
(74) Mandataire: Saint-Gobain Recherche
(86) Numéro de dépôt international: PCT/FR2017/050563
(87) Numéro de publication internationale: WO 2017/158270

(56) Documents cités:
- EP-A2- 1 847 318
- WO-A1-2011/078708
- WO-A1-2015/101743

## Description

La présente invention concerne un procédé de fabrication de plaques de plâtre, et plus précisément de plaques de plâtre contenant du charbon actif. La présente invention porte également sur une plaque de plâtre contenant du charbon actif ainsi que sur son utilisation pour réduire la teneur en composés organiques volatils dans les bâtiments.

Les composés organiques volatils (COV) sont des substances chimiques à base de carbone et d'hydrogène présents dans l'air à l'état gazeux. La directive n°2010/75 de l'union européenne du 24 novembre 2010 les définit comme tout composé organique ayant une pression de vapeur de 0,01 kPa ou plus à une température de 293,15 K ou ayant une volatilité correspondante dans les conditions d'utilisation particulières. Ils comprennent des substances chimiques de diverses natures comme des alcanes, des alcènes tels que les terpènes, des alcynes, des alcools, des aldéhydes tels que le formaldéhyde, l'acétaldéhyde et l'heptanal, des cétones, des éthers tels que les éthers de glycols, des hydrocarbures aromatiques tels que le benzène et le toluène, ou des hydrocarbures halogénés tels que le tétrachloroéthylène et le dichlorobenzène. Des COV sont présents dans la plupart des peintures, matériaux de construction, dissolvants, détergents, combustibles, ainsi que dans les résines, vernis ou colles utilisés pour le mobilier ou les appareils électriques, ou encore dans les fumées de cigarettes. Ces COV se retrouvent dans l'air ambiant des bâtiments et, même si leur quantité paraît faible, ils peuvent à la longue incommoder les personnes qui y sont exposées voire affecter leur santé. En particulier, certains COV peuvent provoquer des réactions allergiques, des problèmes respiratoires, des nausées ou des maux de tête.

Ces dernières années, la proportion de COV émise par les matériaux précités a fortement diminué du fait d'une réglementation plus stricte. Pour autant, les matériaux alternatifs à faible, ou sans, émission de COV présentent souvent un coût plus élevé et des niveaux de performance plus faible.

Parallèlement aux efforts réalisés pour maîtriser l'émission de COV, différents moyens permettant de réduire la quantité de COV dans l'air ambiant ont donc été proposés. Ainsi, il a été proposé d'incorporer des agents adsorbant, tels que le charbon actif, dans les matériaux de construction.

Les plaques de plâtre sont des panneaux comprenant une couche de plâtre entre deux feuilles de parement généralement en carton. Industriellement, le procédé de fabrication de plaques de plâtre comprend trois étapes principales : la mise en forme, la prise et le séchage. Lors de l'étape de mise en forme de la plaque de plâtre, une gâchée est réalisée en continu dans un mélangeur à partir de plâtre, d'eau et d'autres ingrédients spécifiques pour adapter les propriétés de la gâchée et/ou du produit final. Il est notamment connu d'ajouter des agents moussants ou de la mousse directement afin de réduire la densité des plaques de plâtre. La gâchée est ensuite déversée en continu sur une première feuille de parement entraînée par une courroie de transport vers une extrudeuse pour former la plaque. Après le repliement des bords de la première feuille de parement, une seconde feuille de parement est amenée au niveau de l'extrudeuse. L'extrudeuse plaque la seconde feuille de parement sur la gâchée, lisse les surfaces et réduit l'épaisseur de la plaque de plâtre à la valeur souhaitée. Pour améliorer les propriétés mécaniques des plaques de plâtre, il est également connu de former une couche de plâtre plus dense sur une face et éventuellement sur les bords de la plaque de plâtre. Pour cela, une première couche de gâchée plus dense, appelée couche de roller coating, est déversée et formée sur la première feuille de parement, en amont du déversement de la gâchée principale qui forme alors une deuxième couche appelée corps de la plaque de plâtre. WO2011/078708A1, EP1847318A2 et WO2015/101743A1 divulguent des plaques de plâtre comprenant du charbon actif.

Le charbon actif est extrêmement difficile à mettre en œuvre à l'échelle industrielle du fait notamment de sa surface spécifique élevée et de son caractère hydrophobe. Les problèmes de processabilité liés à l'incorporation de charbon actif dans les plaques de plâtre ont par ailleurs des conséquences non négligeables sur les propriétés et la qualité des plaques de plâtre obtenues. En particulier, la Demanderesse a remarqué que, de manière surprenante, le charbon actif notamment en poudre contrecarre l'action des agents moussant, ce qui peut alourdir de façon indésirable la densité de la plaque de plâtre. Par ailleurs, le charbon actif ne se disperse pas de façon homogène dans les gâchées, ce qui peut poser des problèmes pour maîtriser la quantité de charbon actif introduite et affecter l'efficacité des plaques vis-à-vis de l'adsorption des COV. La présente invention propose un procédé de fabrication de plaque de plâtre permettant de surmonter au moins une des difficultés posées par l'incorporation de charbon actif à l'échelle industrielle.

Ainsi, un aspect de la présente invention concerne un procédé de fabrication de plaques de plâtre comprenant un corps de plaque et une couche de roller coating dans lequel du charbon actif en poudre est introduit dans la gâchée destinée à la formation de la couche de roller coating et la gâchée destinée à la formation du corps de la plaque ne comprend pas de charbon actif. La gâchée destinée à la formation du corps de la plaque a en effet un aspect mousseux afin de diminuer le poids de la plaque de plâtre. L'introduction de charbon actif dans cette gâchée aurait pour effet de détruire cette mousse. La couche de roller coating présente quant à elle une densité supérieure au corps de la plaque. La présence de mousse dans la gâchée destinée à la formation de la couche de roller coating n'est donc pas souhaitée. Par conséquent, l'introduction du charbon actif dans la gâchée destinée à la formation de la couche de roller coating ne provoque pas d'alourdissement indésirable de la plaque de plâtre. Au contraire, l'effet anti-mousse du charbon actif peut être avantageusement mis à profit pour éliminer la mousse éventuellement présente dans la gâchée destinée à la couche de roller coating.

La présente invention concerne donc un procédé de fabrication de plaques de plâtre comprenant du charbon actif, ledit procédé comprenant :
- la préparation d'une gâchée principale comprenant un agent moussant et dépourvue de charbon actif ;
- la préparation d'une gâchée secondaire comprenant du charbon actif en poudre ;
- la fourniture d'une première feuille de parement;
- le déversement de la gâchée secondaire sur la première feuille de parement, ladite gâchée secondaire formant une première couche de plâtre;
- le déversement de la gâchée principale sur la première couche, ladite gâchée principale formant une deuxième couche de plâtre;
- la fourniture d'une seconde feuille de parement sur lesdites première et deuxième couches ; et
- le formage de la plaque de plâtre ;
dans lequel la première couche a une densité plus élevée que la première couche. La première couche étant plus dense que la deuxième couche, il est entendu que la gâchée secondaire présente également une densité supérieure à la gâchée principale. Autrement dit, la gâchée secondaire présente un caractère moins mousseux que la gâchée principale. Pour cela, la gâchée principale comprend un agent moussant. L'agent moussant est généralement introduit dans la gâchée principale sous la forme d'une mousse obtenue à partir d'eau et de l'agent moussant. La gâchée principale comprend typiquement 2 à 10 parts de mousse obtenue à partir d'un mélange d'eau et d'un agent moussant. La densité de gâchée secondaire est généralement supérieure d'au moins 5 % et de préférence supérieure d'au plus 40 % par rapport à la gâchée principale, par exemple supérieure de 15 à 25 % par rapport à la gâchée principale. La gâchée principale présente typiquement une densité de 0,6 à 1,5, de préférence de 0,8 à 1,3. La gâchée secondaire présente typiquement une densité de 1,0 à 2,3, de préférence de 1,3 à 2,0.

Le terme « plâtre » au sens de la présente invention désigne en général aussi bien le plâtre pris, c'est-à-dire le dihydrate de sulfate de calcium (CaSO₄, 2 H₂O) que le plâtre non pris, c'est-à-dire l'hémihydrate de sulfate de calcium (CaSO₄, ½H₂O). L'expression « plaque de plâtre » désigne par exemple le produit fini formé par du plâtre pris mais également une plaque de plâtre en cours de fabrication dans laquelle le plâtre n'est pas entièrement pris. Dans certain cas le terme « plâtre » sera cependant compris au sens strict, c'est-à-dire désignant l'hémihydrate de sulfate de calcium. Cela est évident par exemple lors que le terme « plâtre » est utilisé en référence à la matière première pour la préparation des gâchées. De même, lorsqu'il est fait référence à une quantité par rapport au poids sec de plâtre, ce dernier est considéré sous sa forme hémihydrate de sulfate de calcium.

La plaque de plâtre a généralement une épaisseur de 6 à 25 mm, de préférence 10 à 15 mm. La première couche de plâtre est une couche de roller coating. La seconde couche de plâtre forme le corps de la plaque de plâtre. Par « couche de roller coating » au sens de la présente invention, on désigne une couche de plâtre de faible épaisseur présentant une densité supérieure à la couche formant le corps de la plaque de plâtre. Par « corps » de la plaque de plâtre au sens de la présente invention, on désigne une couche de plâtre dont l'épaisseur est au moins égale à la moitié de l'épaisseur de la plaque de plâtre. La première couche de plâtre a typiquement une épaisseur inférieure à 4 mm, par exemple de 0,1 à 4 mm, de préférence de 0,8 à 3 mm. La deuxième couche de plâtre a typiquement une épaisseur de 6 à 25 mm, de préférence de 10 à 15 mm. La densité de la première couche de plâtre est généralement supérieure d'au moins 5 % et de préférence supérieure d'au plus 40 % par rapport à la deuxième couche, par exemple supérieure de 15 à 25 % par rapport à la deuxième couche. La première couche a typiquement une densité de 0,8 à 1,5, de préférence de 1,0 à 1,2. La deuxième couche a typiquement une densité de 0,4 à 1,5, de préférence de 0,6 à 1,0. Dans la présente invention, la densité d'un corps est définie de façon classique, c'est-à-dire par le rapport de la masse volumique dudit corps à la masse volumique de l'eau, prise égale à 1000 kg/m³.

Le charbon actif conforme à la présente invention est un charbon actif en poudre. En effet, à surface spécifique égale, un charbon en poudre présente une efficacité d'absorption des COV supérieure à un charbon actif granulé lorsqu'ils sont introduits dans une plaque de plâtre. De plus, bien que le charbon actif en granulé présente un effet anti-mousse moindre que le charbon actif en poudre, et permettrait l'obtention de plaque de plâtre de densité satisfaisante, l'introduction de charbon actif en granulé dans le corps de la plaque n'est pas avantageuse. La Demanderesse a en effet remarqué que, de manière surprenante, il est possible de diminuer de manière importante la quantité de charbon actif dans la plaque de plâtre tout en améliorant significativement l'efficacité des plaques vis-à-vis de l'absorption de COV lorsque le charbon actif est introduit sous forme de poudre dans la couche de roller coating. Dans la présente invention, lorsqu'il est mentionné qu'une gâchée ou une couche est dépourvue de charbon actif, cela signifie que la gâchée ou la couche ne comprend pas de charbon actif quelle que soit sa forme, en particulier en poudre ou en granulé. Le charbon actif en poudre selon l'invention présente typiquement une taille de particules moyenne de 1 à 100 µm, de préférence de 10 à 50 µm. La taille de particule moyenne est mesurée à l'aide d'un tamis à jet d'air selon la norme ASTM-D-5158-93 *"Standard Test Method for Détermination of the Particle Size of Powdered Activated Carbon by Air Jet Sieving".* Il présente typiquement une surface spécifique d'au moins 100 m²/g, de préférence d'au moins 250 m²/g, plus préférentiellement d'au moins 500 m²/g et jusqu'à 1500 m²/g, voire 2000m²/g et même 2500 m²/g. La surface spécifique est mesurée en utilisant la méthode BET avec de l'azote selon la norme ISO 9277:2010.

La gâchée secondaire comprend typiquement de 0,1 à 10 %, de préférence de 0,5 à 3 % en poids de charbon actif en poudre. La gâchée secondaire comprend de préférence du charbon actif uniquement sous forme de poudre. En particulier, la gâchée secondaire est de préférence dépourvue de charbon actif en granulé. Dans un mode de réalisation particulier, la préparation de la gâchée secondaire comprend de préférence la préparation d'un pré-mélange du charbon actif en poudre avec un agent fluidifiant dans de l'eau et l'ajout dudit pré-mélange dans la gâchée. La Demanderesse a en effet remarqué qu'un pré-mélange du charbon actif en poudre avec l'agent fluidifiant permet d'obtenir une suspension suffisamment stable permettant un dosage convenable du charbon actif, notamment lors de procédés industriels en continu, et une répartition plus homogène de celui-ci dans la gâchée obtenue, et par conséquent dans les plaques de plâtre fabriquées. Le pré-mélange comprend typiquement de 1 à 25 %, de préférence de 5 à 15 % en poids de charbon actif en poudre. Il comprend typiquement au moins 0,01 %, de préférence de 0,05 à 5 %, plus préférentiellement de 0,1 à 3 % en poids d'agent fluidifiant. L'agent fluidifiant peut être notamment choisi parmi les polycarboxylates, notamment les éthers polycarboxylates, les polynaphtalènes sulfonés (sels de polycondensats sulfonés de naphtalène et de formaldéhyde), les lignosulfonates, les résines mélamine sulfonées (sels de polycondensats sulfonés de mélamine et formaldéhyde) et les polyacrylates couramment utilisés dans la fabrication des plaques de plâtre. A titre d'exemples d'agents fluidifiants, on peut citer ceux commercialisés sous la dénomination GLENIUM® par BASF, sous la dénomination FLUBE® par Bozzetto, sous la dénomination CHRYSOFLUID® par Chryso, sous la dénomination VISCOCRETE® par Sika, sous la dénomination MELMENT® par BASF ou encore sous la dénomination MAPEFLUID® par Mapei. L'agent fluidifiant est de préférence choisi parmi les polynaphtalènes sulfonés et les résines mélamine-formaldéhyde sulfonées, plus préférentiellement parmi les polynaphtalènes sulfonés.

La gâchée principale comprend typiquement pour 100 parts en poids de plâtre :
- 50 à 200 parts d'eau ;
- 2 à 10 parts de mousse obtenue à partir d'un mélange d'eau et d'un agent moussant, par exemple un alkylsulfate éventuellement en mélange avec un alkyléthersulfate ; et
- 0,1 à 1 part d'accélérateur de prise, par exemple le sulfate de calcium hydraté ou le sulfate de potassium.
Elle peut comprendre des additifs de processabilité permettant d'ajuster les propriétés des gâchées ainsi que d'autres agents fonctionnels permettant de modifier les propriétés de la plaque de plâtre finale. Les additifs de processabilité bien connus de l'homme du métier peuvent être notamment des agents d'adhésion, des retardateurs de prise, des accélérateurs de prise, des agents fluidifiants ou des agents épaississant. Les agents fonctionnels également bien connus de l'homme du métier peuvent être des agents biocides, des agents hydrofugeant, des agents anti-feu ou des agents de renforcement. A titre d'exemple, la gâchée principale peut comprendre un ou plusieurs des composants suivants :
- 0,1 à 15 parts d'un agent d'adhésion, par exemple un poly(acétate de vinyl), un poly(alcool vinylique), un amidon, notamment préalablement traité avec un acide ou pré-gélatinisé, une dextrine ou une farine végétale, notamment de blé ou de maïs ;
- 0,001 à 10 parts d'un biocide, par exemple les carbamates, tel que le 3-iodoprop-2-yn-1-yl butylcarbamate, ou les complexes de pyrothione ;
- 0,1 à 10 parts d'au moins un agent hydrofugeant, par exemple un siloxane, un polysiloxane ou une cire ;
- 0,1 à 20 parts d'au moins un agent anti-feu, par exemple la vermiculite, la silice, notamment de dimension micrométrique ou une argile ; et/ou
- 0,1 à 20 parts d'au moins un agent de renforcement, par exemple des fibres de polymère, des fibres minérales, notamment en verre, ou végétales.

La composition de la gâchée secondaire est telle que décrite ci-dessus pour la gâchée principale à l'exception du fait qu'elle ne contient pas de mousse et qu'elle comprend du charbon actif en poudre, comme décrit ci-dessus. La gâchée principale et la gâchée secondaire peuvent être préparées indépendamment. Dans ce cas, il n'y a pas de mousse ajoutée à la gâchée secondaire lors de sa préparation. La gâchée secondaire est cependant de préférence obtenue à partir de la gâchée principale. Dans ce cas, une partie de la de gâchée principale est prélevée et la mousse doit être cassée pour préparer la gâchée secondaire. La gâchée secondaire doit en effet présenter un caractère moins mousseux que la gâchée principale, de préférence non mousseux, pour permettre la formation d'une couche de roller coating plus dense que le corps de la plaque. Afin de casser la mousse présente dans la gâchée principale, il est généralement nécessaire d'y ajouter un agent anti-moussant. Le procédé selon l'invention permet cependant de tirer profit des propriétés anti-mousse du charbon actif en poudre en réduisant la quantité d'agent anti-mousse nécessaire, voire en n'ajoutant aucun agent anti-mousse autre que le charbon actif en poudre à la partie de la gâchée principale prélevée pour préparer la gâchée secondaire. Dans un mode de réalisation particulier, le procédé selon la présente invention comprend donc :
- la préparation d'une gâchée principale dépourvue de charbon actif ;
- le prélèvement d'une partie de la gâchée principale ;
- l'ajout de charbon actif en poudre à la partie prélevée de la gâchée principale afin d'obtenir une gâchée secondaire ;
- la fourniture d'une première feuille de parement;
- le déversement de la gâchée secondaire sur la première feuille de parement, ladite gâchée secondaire formant une première couche de plâtre;
- le déversement de la gâchée principale sur la première couche, ladite gâchée principale formant une deuxième couche de plâtre;
- la fourniture d'une seconde feuille de parement sur lesdites première et deuxième couches ; et
- le formage de la plaque de plâtre ;
dans lequel la première couche a une densité plus élevée que la première couche. De préférence, aucun agent anti-mousse autre que le charbon actif en poudre n'est ajouté à la partie prélevée de la gâchée principale pour obtenir la gâchée secondaire.

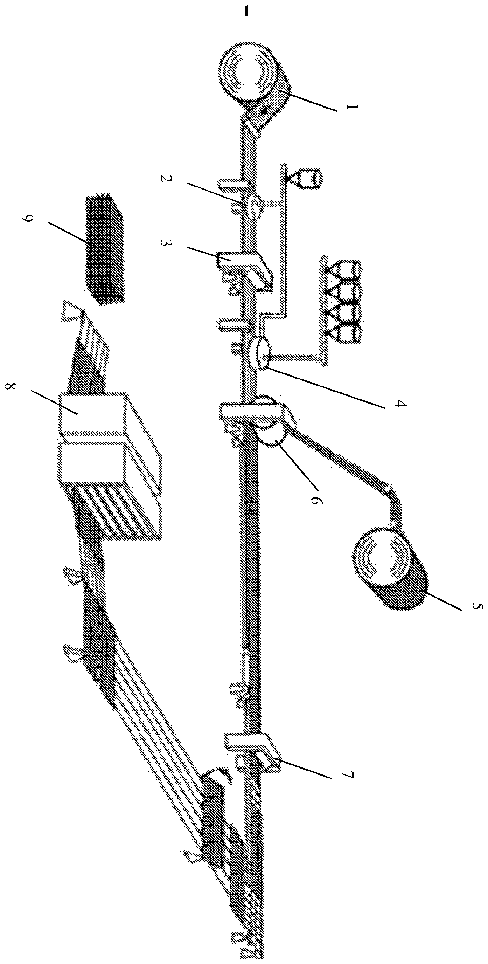

La Fig. 1 illustre de manière schématique un exemple de ligne industrielle permettant la mise en œuvre du procédé selon l'invention. Une gâchée principale est préparée en continu dans un mélangeur principal 4. Une partie de la gâchée principale est prélevée au niveau du mélangeur principal 4 et envoyée par une conduite vers un mélangeur secondaire 2 et mélangée au charbon actif en poudre pour obtenir une gâchée secondaire. Une première feuille de parement 1 formant généralement la face avant de la plaque de plâtre (face visible lors du montage de la plaque) est entraînée par une courroie de transport. La gâchée secondaire est déversée en continu à partir du mélangeur secondaire 2 sur la première feuille de parement 1 et formée en une première couche homogène par un ensemble de rouleaux 3. Cette première couche donnera la couche de roller coating. A une distance déterminée permettant une prise suffisante de la première couche, la gâchée principale est déversée à partir du mélangeur principal 4 sur la première couche. Une deuxième feuille de parement 5 est amenée au-dessus de la gâchée principale au niveau de l'extrudeuse principale 6. Une bande de plâtre est extrudée à l'épaisseur voulue par l'extrudeuse principale 6 qui répartit la gâchée principale pour former la couche qui donnera le corps de la plaque. Après le transport de la bande de plâtre pendant une durée appropriée pour permettre une prise suffisante du plâtre, la bande de plâtre est coupée à la dimension souhaitée par un couteau rotatif 7. La plaque est ensuite généralement retournée pour éviter d'endommager la face avant de la plaque et transportée vers une série de séchoirs à étage 8 pour compléter la prise du plâtre et éliminer l'eau excédentaire avant d'être conditionnée et envoyée en zone de stockage 9.

La présente invention concerne également une plaque de plâtre comprenant du charbon actif en poudre obtenue par le procédé tel que défini ci-dessus. Plus précisément, la présente invention concerne une plaque de plâtre comprenant une première couche de plâtre et une deuxième couche de plâtre caractérisée en ce que la première couche est plus dense que la deuxième couche ; la première couche comprend du charbon actif en poudre ; et la deuxième couche est dépourvue de charbon actif. La plaque de plâtre selon l'invention comprend typiquement de 0,01 à 2 %, de préférence de 0,05 à 1 % en poids de charbon actif par rapport au poids sec de plâtre. En particulier, la première couche comprend typiquement de 0,2 à 10 %, de préférence de 1 à 5 % en poids sec de charbon actif en poudre par rapport au poids sec de plâtre. La première couche comprend de préférence du charbon actif uniquement sous forme de poudre. En particulier, elle est de préférence dépourvue de charbon actif en granulé. Les épaisseurs et densité des premières et deuxièmes couches sont de préférence telles que décrites ci-dessus.

La présente invention concerne également l'utilisation d'une plaque de plâtre telle que décrite ci-dessus pour réduire la quantité de COV dans l'air à l'intérieur des bâtiments. Les COV sont de préférence choisis parmi le formaldéhyde, l'hexanal, le benzène, le toluène, le tétrachloroéthène, le 1,2-dichlorobenzène et l'undécane.

L'invention est illustrée à l'aide d'exemples non limitatifs suivants.

### EXEMPLE 1

Une plaque de référence P0 formée d'une seule couche de corps d'épaisseur 12,5 mm est fabriquée à partir de la gâchée principale comprenant 100 parts en poids de plâtre (CaSO₄, ½H₂O), 75 parts d'eau, 4 parts de mousse (obtenue à partir d'eau contenant 1% en poids de laurylsulfate de sodium), 5 parts d'amidon, 3 parts de fluidifiant et 0,5 parts d'accélérateur. Les différents ingrédients sont pesés et mélangés à l'aide d'un malaxeur et d'une pale de type dé-floculeuse à 1600 TR/mn pendant une minute pour obtenir une pâte homogène. La mousse est préparée à la densité souhaitée et mélangée à la pâte obtenue dans un malaxeur avec une pale à 250 tr/mn pour obtenir une gâchée principale. Dans un moule de dimension 20 x 25 cm et d'épaisseur 12,5 mm, on dispose une première feuille de carton. La gâchée principale est versée sur le premier carton et arasée à l'épaisseur du moule. Une deuxième feuille de carton est disposée sur la gâchée principale et le moule est refermé pour maintenir une pression sur la plaque. Après durcissement de la plaque, celle-ci est démoulée et séchée en étuve pendant 24 heures à 40°C.

Une plaque P1 formée d'une seule couche de corps d'épaisseur 12,5 mm est fabriquée de la même façon que la plaque P0 à la différence que la gâchée principale comprend 2,8 % en poids de charbon actif en granules (CAG), commercialisé sous la référence Envirocarb® 207C et ayant une surface spécifique de 1100 m²/g et une taille de particule moyenne d'environ 2,4 mm. La quantité de charbon actif dans la plaque P1 est d'environ 210 g/m².

Une plaque P2 formée d'une seule couche de corps d'épaisseur 12,5 mm est fabriquée de la même façon que la plaque P1 à la différence que le charbon actif utilisé est un charbon actif en poudre (CAP) commercialisé sous la référence Pulsorb® 208CP ayant une surface spécifique de 1200 m²/g et une taille de particules moyenne d'environ 30 µm. La quantité de charbon actif dans la plaque P2 est d'environ 210 g/m².

Une plaque P3 formée d'une couche de corps de 11,5 mm et d'une couche de roller coating d'épaisseur 1 mm est fabriquée à partir d'une gâchée principale identique à la plaque P0 pour la couche de corps et d'une gâchée secondaire pour la couche de roller coating. La gâchée secondaire est préparée en ajoutant 35 % en poids de charbon actif en poudre (CAP) Pulsorb® 208CP à une gâchée identique à la gâchée principale. Dans un moule de dimension 20 x 25 cm et d'épaisseur 12,5 mm, on dispose une première feuille de carton. La gâchée secondaire est versée sur le premier carton et arasée à une épaisseur d'environ 1 mm. La gâchée principale est déversée sur la gâchée secondaire lorsque celle-ci est suffisamment prise et arasée à l'épaisseur du moule. Une deuxième feuille de carton est disposée sur la gâchée principale et le moule est refermé pour maintenir une pression sur la plaque. Après durcissement de la plaque, celle-ci est démoulée et séchée en étuve pendant 24 heures à 40°C. La quantité de charbon actif dans la plaque est d'environ 210 g/m².

Le tableau présente la densité des plaques P0 à P3. Les plaques P1 et P2 dans lesquelles du charbon actif a été introduit dans le corps de la plaque présentent une densité supérieure à la plaque de référence P0. Il est supposé que le charbon actif contrecarre l'action de l'agent moussant, ce qui a pour effet de détruire la mousse et d'augmenter la densité de la plaque de plâtre. Cet effet est particulièrement marqué pour la plaque P2 qui comprend du charbon actif en poudre. Au contraire, la plaque P3 présente une densité comparable à la plaque de référence P0.

**Tableau 1**

| | P0 | P1 | P2 | P3 |
|---|---|---|---|---|
| Densité | 0,72 | 0,76 | 1 | 0,72 |

Afin d'éviter une augmentation indésirable de la densité de la plaque de plâtre, le charbon actif doit donc être utilisé soit sous forme de granule dans le corps de la plaque, soit sous forme de poudre dans la couche de roller coating.

### EXEMPLE 2

Une plaque A formée d'une seule couche de corps d'épaisseur 12,5 mm comprenant du charbon actif en granules (CAG) est fabriquée de la même façon que la plaque P1 à la différence que la gâchée comprend 1 % en poids de charbon actif au lieu de 2,8 %. La quantité de charbon actif dans la plaque est d'environ 76 g/m².

Une plaque B formée d'une couche de corps de 11,5 mm et d'une couche de roller coating d'épaisseur 1 mm comprenant du charbon actif en poudre (CAP) est fabriquée de la même façon que la plaque P3 à la différence que la gâchée secondaire comprend 1 % en poids de charbon actif au lieu de 35 %. La quantité de charbon actif dans la plaque est d'environ 6 g/m².

La capacité de chacune des plaques à piéger les COV a ensuite été évaluée selon la norme ISO1600-24:2009 à une température de 23°C ± 2°C et une humidité relative de 50 % ± 5% pendant l'essai. Le facteur de charge de la plaque est fixé à 1 m²/m³, le taux de renouvellement de l'air à 0,5 vol.h⁻¹ et les concentrations en benzène à 5 µg.m⁻³, en toluène à 36 µg.m⁻³, en heptanal à 19 µg.m⁻³, en tétrachloroéthène à 6 µg.m⁻³, en dichlorobenzène à 5,5 µg.m⁻³ et en undécane à 18 µg.m⁻³. Le tableau 2 indique le pourcentage de réduction de la teneur du COV considéré pour chacune des plaques.

**Tableau 2**

| | A | B |
|---|---|---|
| Type et quantité de charbon actif dans la plaque | CAG 76 g/m² (dans le corps) | CAP 6 g/m² (dans le roller coating) |
| Benzène | 50 | 85 |
| Toluène | 34 | 65 |
| Heptanal | 54 | 64 |
| Tétrachloroéthène | 45 | 76 |
| Dichlorobenzène | 50 | 74 |
| Undécane | 40 | 69 |

A surface spécifique constante et malgré une quantité de charbon actif beaucoup plus importante dans la plaque A, la plaque B est beaucoup plus efficace pour piéger les COV. En plus d'éviter une augmentation indésirable de la densité de la plaque (cf. exemple 1), l'introduction de charbon actif en poudre dans la couche de roller coating permet d'augmenter l'efficacité de piégeage des COV tout en diminuant significativement la quantité de charbon actif nécessaire par rapport à l'utilisation de charbon actif en granule dans le corps de la plaque.

### EXEMPLE 3

Des essais de stabilisation de charbon actif en suspension aqueuse ont été réalisés avec différents tensioactifs (exemples comparatifs C1 à C5) ainsi que des agents fluidifiants utilisés dans la fabrication des plaques de plâtre (exemples selon l'invention Il à I3). FL1 et FL2 sont des agents fluidifiant de type polynaphtalène sulfoné et FL3 est un agent fluidifiant de type résine mélanine sulfonée. Les pré-mélanges ont été préparés à l'aide d'un mélangeur de type agitateur électrique à 700 tr/min.

La stabilité des suspensions a été évaluée par observation visuelle : le pré-mélange est placé dans un contenant transparent et observé à l'œil nu à intervalle de temps régulier. La stabilité des suspensions est mesurée en relevant la hauteur de la colonne (surnageant clair). Les résultats, résumés dans le tableau 3, sont exprimés en pourcentage de la hauteur de colonne d'eau (surnageant clair) par rapport à la hauteur totale de la suspension.

**Tableau 3**

| | C0 | C1 | C2 | C3 | C4 | C5 | I1 | I2 | I3 |
|---|---|---|---|---|---|---|---|---|---|
| *Eau* | 90 | 90 | 90 | 90 | 90 | 90 | 90 | 90 | 90 |
| *CAP* | 10 | 10 | 10 | 10 | 10 | 10 | 10 | 10 | 10 |
| *SDS^{(a)}* | - | 0,3 | - | - | - | - | - | - | - |
| *Tween 80* | - | - | 2,1 | - | - | - | - | - | - |
| *Triton^{(b)}* | - | - | - | 0,08 | - | - | - | - | - |
| *DDM^{(c)}* | - | - | - | - | 0,1 | - | - | - | - |
| *CHAPS^{(d)}* | - | - | - | - | - | 0,1 | - | - | - |
| *FL 1* | - | - | - | - | - | - | 0,6 | - | - |
| *FL 2* | - | - | - | - | - | - | - | 0,6 | - |
| *FL 3* | - | - | - | - | - | - | - | - | 0,6 |
| *Précipités à 1h* | 90 | 50 | 50 | 90 | 80 | 90 | 10 | 5 | 10 |
| *Précipités à 1j* | 90 | 90 | 90 | 90 | 90 | 90 | 20 | 10 | 20 |
| *Précipités à 3j* | 90 | 90 | 90 | 90 | 90 | 90 | 20 | 10 | 20 |

| | | | | | | | | | |
|---|---|---|---|---|---|---|---|---|---|
| ^{(a)} STEPANOL EHS commercialisé par Stepan ^{(b)} Triton-X100 commercialisé par SPI ^{(c)} n-dodecyl-β-D-maltoside ^{(d)} (3-[(3-Cholamidopropyl)-diméthyl-ammonio]-propanesulfonate) | | | | | | | | | |

Les agents fluidifiants permettent de stabiliser le charbon actif en poudre de façon beaucoup plus efficace que les tensioactifs classiques. La préparation d'un pré-mélange de charbon actif en poudre en suspension aqueuse avec un agent fluidifiant permet donc une meilleure maîtrise de la quantité de charbon actif ajoutée, notamment lors de procédés industriels en continu. Cela permet également une répartition plus homogène du charbon actif dans la couche de roller coating et par conséquent une meilleure efficacité des plaques plaque vis-à-vis du piégeage des COV et une meilleure régularité entre les plaques de plâtre. Enfin, l'utilisation d'agents fluidifiants déjà utilisés dans la préparation de la gâchée a pour avantage d'éviter l'utilisation d'adjuvants supplémentaires qui pourraient modifier les propriétés de la gâchée et/ou perturber le procédé de fabrication.

## Revendications

1. Procédé de fabrication d'une plaque de plâtre comprenant du charbon actif, ledit procédé comprenant :
- la préparation d'une gâchée principale comprenant un agent moussant et dépourvue de charbon actif ;
- la préparation d'une gâchée secondaire comprenant du charbon actif en poudre ;
- la fourniture d'une première feuille de parement;
- le déversement de la gâchée secondaire sur la première feuille de parement, ladite gâchée secondaire formant une première couche de plâtre;
- le déversement de la gâchée principale sur la première couche, ladite gâchée principale formant une deuxième couche de plâtre;
- la fourniture d'une seconde feuille de parement sur lesdites première et deuxième couches ; et
- le formage de la plaque de plâtre ;
dans lequel la gâchée secondaire a une densité plus élevée que la gâchée principale.

2. Procédé selon la revendication 1, **caractérisé en ce que** la deuxième couche a une épaisseur au moins égale à la moitié de l'épaisseur de la plaque de plâtre.

3. Procédé selon l'une quelconque des revendications 1 ou 2, **caractérisé en ce que** la première couche a une épaisseur inférieure à 4 mm et la deuxième couche a une épaisseur de 6 à 25 mm.

4. Procédé selon l'une quelconque des revendications 1 à 3, **caractérisé en ce que** la gâchée secondaire a une densité supérieure d'au moins 5 % par rapport à la gâchée principale.

5. Procédé selon l'une quelconque des revendications 1 à 4, **caractérisé en ce que** la gâchée principale a une densité de 0,8 à 1,3 et la gâchée secondaire a une densité de 1,3 à 2,0.

6. Procédé selon l'une quelconque des revendications 1 à 5, **caractérisé en ce que** la gâchée principale comprend, pour 100 parts en poids de plâtre :
- 50 à 200 parts d'eau ;
- 2 à 10 parts de mousse obtenue à partir d'un mélange d'eau et d'un agent moussant ; et
- 0,1 à 1 part d'accélérateur de prise.

7. Procédé selon l'une quelconque des revendications 1 à 6, **caractérisé en ce que** le charbon actif en poudre a une surface spécifique de 100 à 2500 m²/g et une taille moyenne de particule de 1 à 100 µm.

8. Procédé selon l'une quelconque des revendications 1 à 7, **caractérisé en ce que** la gâchée secondaire est obtenue à partir de la gâchée principale.

9. Procédé selon l'une quelconque des revendications 1 à 8, **caractérisé en ce que** la gâchée secondaire comprend de 0,1 à 10 % en poids de charbon actif en poudre.

10. Procédé selon l'une quelconque des revendications 1 à 9, **caractérisé en ce que** la préparation de la gâchée secondaire comprend la préparation d'un pré-mélange de charbon actif en poudre avec un agent fluidifiant dans l'eau et l'ajout dudit pré-mélange à la gâchée.

11. Procédé selon la revendication 10, **caractérisé en ce que** le pré-mélange comprend de 1 à 25 % en poids de charbon actif en poudre.

12. Procédé selon l'une quelconque des revendications 9 ou 11, **caractérisé en ce que** le pré-mélange comprend au moins 0,01 % en poids d'agent fluidifiant.

13. Procédé selon l'une quelconque des revendications 9 à 12, **caractérisé en ce que** l'agent fluidifiant est choisi parmi les polycarboxylates, les polynaphtalènes sulfonés, les lignosulfonates, les résines mélamine sulfonées et les polyacrylates.

14. Procédé selon l'une quelconque des revendications 1 à 13, **caractérisé en ce que** la gâchée secondaire est dépourvue d'agent anti-mousse.

15. Plaque de plâtre obtenue par le procédé tel que défini à l'une quelconque des revendications 1 à 14.

16. Utilisation d'une plaque de plâtre tel que défini à la revendication 12 pour réduire la quantité de composés organiques volatils dans l'air à l'intérieur des bâtiments.

## Patentansprüche

1. Verfahren zur Herstellung einer Gipsplatte, die Aktivkohle umfasst, wobei das Verfahren umfasst:
- die Zubereitung eines Hauptgemischs, das einen Schaumbildner enthält und frei von Aktivkohle ist;
- die Zubereitung eines Nebengemischs, das pulverförmige Aktivkohle umfasst;
- die Bereitstellung einer ersten Verblendungsplatte;
- das Gießen des Nebengemischs auf die erste Verblendungsplatte, wobei das Nebengemisch eine erste Gipsschicht bildet;
- das Gießen des Hauptgemischs auf die erste Schicht, wobei das Hauptgemisch eine zweite Gipsschicht bildet;
- die Bereitstellung einer zweiten Verblendungsplatte auf der ersten und der zweiten Schicht; und
- das Formen der Gipsplatte;
wobei das Nebengemisch eine höhere Dichte als das Hauptgemisch aufweist.

2. Verfahren nach Anspruch 1, **dadurch gekennzeichnet, dass** die zweite Schicht eine Stärke aufweist, die mindestens der Hälfte der Stärke der Gipsplatte entspricht.

3. Verfahren nach einem der Ansprüche 1 oder 2, **dadurch gekennzeichnet, dass** die erste Schicht eine Stärke kleiner als 4 mm und die zweite Schicht eine Stärke von 6 bis 25 mm aufweist.

4. Verfahren nach einem der Ansprüche 1 bis 3, **dadurch gekennzeichnet, dass** das Nebengemisch eine Dichte aufweist, die um mindestens 5 % höher ist als die des Hauptgemischs .

5. Verfahren nach einem der Ansprüche 1 bis 4, **dadurch gekennzeichnet, dass** das Hauptgemisch eine Dichte von 0,8 bis 1,3 aufweist, und das Nebengemisch eine Dichte von 1,3 bis 2,0 aufweist.

6. Verfahren nach einem der Ansprüche 1 bis 5, **dadurch gekennzeichnet, dass** das Hauptgemisch pro 100 Gewichtsanteilen Gips umfasst:
- 50 bis 200 Teile Wasser;
- 2 bis 10 Teile Schaum, der aus einer Mischung aus Wasser und einem Schaumbildner erhalten wird; und
- 0,1 bis 1 Teil Abbindebeschleuniger.

7. Verfahren nach einem der Ansprüche 1 bis 6, **dadurch gekennzeichnet, dass** die pulverförmige Aktivkohle eine spezifische Oberfläche von 100 bis 2500 m²/g und eine durchschnittliche Partikelgröße von 1 bis 100 µm aufweist.

8. Verfahren nach einem der Ansprüche 1 bis 7, **dadurch gekennzeichnet, dass** das Nebengemisch ausgehend von dem Hauptangemisch erhalten wird.

9. Verfahren nach einem der Ansprüche 1 bis 8, **dadurch gekennzeichnet, dass** das Nebengemisch 0,1 bis 10 Gew.-% pulverförmige Aktivkohle umfasst.

10. Verfahren nach einem der Ansprüche 1 bis 9, **dadurch gekennzeichnet, dass** die Zubereitung des Nebengemischs die Zubereitung einer Vormischung aus pulverförmigem Aktivkohlepulver mit einem Flussmittel in Wasser und die Zugabe der Vormischung zu dem Gemisch umfasst.

11. Verfahren nach Anspruch 10, **dadurch gekennzeichnet, dass** die Vormischung 1 bis 25 Gew.-% pulverförmige Aktivkohle umfasst.

12. Substrat nach einem der Ansprüche 9 oder 11, **dadurch gekennzeichnet, dass** die Vormischung mindestens 0,01 Gew.-% Flussmittel umfasst.

13. Verfahren nach einem der Ansprüche 9 bis 12, **dadurch gekennzeichnet, dass** das Flussmittel aus den Polycarboxylaten, den sulfonierten Polynaphthalinen, den Ligninsulfonaten, den sulfonierten Melaminharzen und den Polyacrylaten ausgewählt ist.

14. Verfahren nach einem der Ansprüche 1 bis 13, **dadurch gekennzeichnet, dass** das Nebengemisch keinen Entschäumer enthält.

15. Gipsplatte, die nach dem nach einem der Ansprüche 1 bis 14 definierten Verfahren erhalten wird.

16. Verwendung einer Gipsplatte, wie in Anspruch 12 definiert, um die Menge an flüchtigen organischen Verbindungen in der Luft in Gebäuden zu reduzieren.

## Claims

1. A process for the manufacture of a plasterboard comprising activated carbon, said process comprising:
- the preparation of a main mixed batch comprising a foaming agent and devoid of activated carbon;
- the preparation of a secondary mixed batch comprising powdered activated carbon;
- the provision of a first facing sheet;
- the pouring of the secondary mixed batch over the first facing sheet, said secondary mixed batch forming a first plaster layer;
- the pouring of the main mixed batch over the first layer, said main mixed batch forming a second plaster layer;
- the provision of a second facing sheet on said first and second layers; and
- the forming of the plasterboard;
in which the secondary mixed batch has a greater density than the main mixed batch.

2. The process as claimed in claim 1, **characterized in that** the second layer has a thickness at least equal to half the thickness of the plasterboard.

3. The process as claimed in either one of claims 1 and 2, **characterized in that** the first layer has a thickness of less than 4 mm and the second layer has a thickness of 6 to 25 mm.

4. The process as claimed in any one of claims 1 to 3, **characterized in that** the secondary mixed batch has a density greater by at least 5% with respect to the main mixed batch.

5. The process as claimed in any one of claims 1 to 4, **characterized in that** the main mixed batch has a density of 0.8 to 1.3 and the secondary mixed batch has a density of 1.3 to 2.0.

6. The process as claimed in any one of claims 1 to 5, **characterized in that** the main mixed batch comprises, per 100 parts by weight of plaster:
- from 50 to 200 parts of water;
- from 2 to 10 parts of foam obtained from a mixture of water and a foaming agent; and
- from 0.1 to 1 part of setting accelerator.

7. The process as claimed in any one of claims 1 to 6, **characterized in that** the powdered activated carbon has a specific surface of 100 to 2500 m²/g and a mean particle size of 1 to 100 µm.

8. The process as claimed in any one of claims 1 to 7, **characterized in that** the secondary mixed batch is obtained from the main mixed batch.

9. The process as claimed in any one of claims 1 to 8, **characterized in that** the secondary mixed batch comprises from 0.1 to 10% by weight of powdered activated carbon.

10. The process as claimed in any one of claims 1 to 9, **characterized in that** the preparation of the secondary mixed batch comprises the preparation of a premix of powdered activated carbon with a plasticizer in water and the addition of said premix to the mixed batch.

11. The process as claimed in claim 10, **characterized in that** the premix comprises from 1 to 25% by weight of powdered activated carbon.

12. The process as claimed in either one of claims 9 and 11, **characterized in that** the premix comprises at least 0.01% by weight of plasticizer.

13. The process as claimed in any one of claims 9 to 12, **characterized in that** the plasticizer is chosen from polycarboxylates, sulfonated polynaphthalenes, lignosulfonates, sulfonated melamine resins and polyacrylates.

14. The process as claimed in any one of claims 1 to 13, **characterized in that** the secondary mixed batch is devoid of antifoaming agent.

15. A plasterboard obtained by the process as defined in any one of claims 1 to 14.

16. The use of a plasterboard as defined in claim 12 for reducing the amount of volatile organic compounds in the air inside buildings.
